# EUROPÄISCHE PATENTSCHRIFT

(11) **EP 4 139 551 B1**
(45) Veröffentlichungstag und Bekanntmachung des Hinweises auf die Patenterteilung: **14.02.2024**
(21) Anmeldenummer: 21724545.5
(22) Anmeldetag: 16.02.2021
(51) Int. Cl.: E05F 15/611, B60Q 1/32, E05B 17/10

(54) **KRAFTFAHRZEUG**
MOTOR VEHICLE
VÉHICULE AUTOMOBILE

(30) Priorität: 21.04.2020 DE 102020110812; 21.04.2020 DE 102020110797
(43) Veröffentlichungstag der Anmeldung: 01.03.2023
(73) Patentinhaber: Kiekert Aktiengesellschaft, 42579 Heiligenhaus (DE)
(72) Erfinder: BENDEL, Thorsten, 46149 Oberhausen (DE)
(86) Internationale Anmeldenummer: PCT/DE2021/100151
(87) Internationale Veröffentlichungsnummer: WO 2021/213566

(56) Entgegenhaltungen:
- CN-U- 202 345 520
- DE-U1- 29 917 921
- DE-U1-202020 101 001
- FR-A1- 3 086 685
- US-A1- 2012 192 602
- US-A1- 2017 021 759
- US-A1- 2022 213 722
- US-B2- 8 807 807
- US-B2- 10 363 867

## Beschreibung

Der Erfindung betrifft ein Kraftfahrzeug, mit wenigstens einer gegenüber einer Kraftfahrzeugkarosserie bewegbaren Kraftfahrzeug-Klappe nach Anspruch 1.

Bei der gegenüber der Kraftfahrzeugkarosserie bewegbaren Kraftfahrzeug-Klappe handelt es sich im Rahmen der Erfindung und nicht einschränkend um eine Kraftfahrzeugfronthaube, eine Kraftfahrzeugheckklappe, eine Kraftfahrzeugladeklappe, eine Kraftfahrzeugtankklappe usw. In der Regel werden in diesem Zusammenhang als Kraftfahrzeug-Klappen, Kraftfahrzeugtüren und insbesondere Kraftfahrzeug-Seitentüren betrachtet. Diese sind mit der Ausstelleinheit ausgerüstet, welche in der Regel nach einem Entriegelungs- und Öffnungsvorganges der zugehörigen Kraftfahrzeug-Tür dafür sorgt, dass ein zugehöriger Klappenflügel bzw. Türflügel ausgestellt wird.

Die Ausstellbewegung des Klappenflügels bzw. Türflügels erfolgt dabei zumindest soweit, dass regelmäßig ein Spalt zwischen der fraglichen Kraftfahrzeug-Klappe bzw. Kraftfahrzeug-Tür und der Kraftfahrzeugkarosserie entsteht, durch welchen hindurch der Türflügel manuell ergriffen und aufgeschwenkt werden kann. Eine solche Vorgehensweise empfiehlt sich insbesondere bei grifflosen Kraftfahrzeug-Türen, also solchen, die aus meistens aerodynamischen Gründen nicht über einen Außentürgriff verfügen.

Zu diesem Zweck kann die Ausstelleinheit und damit auch das Ausstellelement sowohl an der Kraftfahrzeugkarosserie als auch an der Kraftfahrzeugklappe oder sogar an beiden Bestandteilen angebracht sein. In der Regel ist die Kraftfahrzeug-Klappe mit der Ausstelleinheit ausgerüstet. Dabei findet sich die Ausstelleinheit typischerweise im seitlichen Randbereich der Kraftfahrzeug-Klappe, beispielsweise im Bereich des Seitenrandes der Kraftfahrzeug-Klappe bzw. Kraftfahrzeug-Tür, welcher (bei einer vorderen Kraftfahrzeug-Seitentür) einer B-Säule zugewandt ist. Dadurch kann das Ausstellelement in ausgefahrener Position gegen die B-Säule fahren und so für die gewünschte Ausstellbewegung der Kraftfahrzeug-Klappe bzw. Kraftfahrzeug-Tür gegenüber der Kraftfahrzeugkarosserie sorgen.

Bei einem gattungsgemäßen Kraftfahrzeug, wie es in der DE 10 2018 129 403 A1 beschrieben wird, geht es insgesamt um ein angetriebenes Türpräsentatorsystem für ein Kraftfahrzeug. Mit Milfe des Türpräsentatorsystems lässt sich die Fahrzeugtür relativ zur Fahrzeugkarosserie zwischen einer geschlossenen Position, einer präsentierten Position und einer vollständig geöffneten Position bewegen. Dazu verfügt das bekannte Türpräsentatorsystem über ein Stellglied, das mit der Fahrzeugkarosserie oder der Fahrzeugtür verbunden ist. Dadurch soll insgesamt eine reduzierte Komplexität bei verminderten Kosten beobachtet werden. Die FR 3 086 685 A1 zeigt ein weiteres Kraftfahrzeug mit Türpräsentatorsystem.

Ein vergleichbares Kraftfahrzeug wird in der DE 10 2015 003 918 A1 beschrieben. In diesem Fall geht es um ein Kraftfahrzeugschloss, welches mit einer zusätzlichen Ausstelleinrichtung ausgerüstet ist. Dadurch lässt sich ein das Kraftfahrzeugschloss aufnehmendes Fahrzeugteil aus einer Schließstellung heraus in eine Öffnungsstellung bewegen. Dazu ist die Ausstelleinrichtung in das Kraftfahrzeugschloss zumindest teilweise integriert. Hierdurch kann das Kraftfahrzeugteil in eine definierte Lage gebracht werden, um Schäden oder Fehlbetätigungen zu vermeiden. Außerdem wird eine einfache und kostengünstige Lösung bereitgestellt.

Der Stand der Technik hat sich grundsätzlich bewährt. Allerdings besteht bei den bekannten Lehren und den ausgestellten Kraftfahrzeugfahrzeug-Klappen das generelle Problem, dass die fragliche Kraftfahrzeug-Klappe in der Regel manuell und händisch aufgeschwenkt wird. Das stellt eine ernst zunehmende Gefahrenquelle für beispielsweise sich von hinten annähernde andere Kraftfahrzeuge, Fußgänger oder Radfahrer dar. Eine solche Gefahrenquelle liegt insbesondere bei ungünstigen Sichtverhältnissen, bei Regen, Nacht etc. vor.

Zwar sind im Stand der Technik nach der DE 20 2013 005 022 U1 bereits Kraftfahrzeugtüren bekannt, die mit einer Leuchtvorrichtung ausgerüstet sind. Allerdings stellt die bekannte Leuchtvorrichtung einen Bestandteil eines Elektronikmoduls dar, welches seinerseits als Steckmodul ausgebildet ist und mit wenigstens einem Steckzapfen in eine Steckaufnahme einer Vertiefung im Türaußenblech eingreift. Die Vertiefung wird dabei überwiegend ausgefüllt. - Mit Blick auf beabsichtigte türgrifflose Kraftfahrzeug-Klappen ist die bekannte Lösung letztendlich schon deshalb nicht geeignet, weil als die Leuchtvorrichtung aufnehmende Vertiefung typischerweise eine Griffmulde im Türaußenblech für einen Außentürgriff genutzt wird.

Der weitere Stand der Technik nach der DE 20 2006 004 187 U1 betrifft eine Vorrichtung, die zumindest ein Fahrzeugbauteil und eine Schlosseinheit umfasst. Außerdem ist die Schlosseinheit mit einer Beleuchtungseinheit ausgerüstet. Diese soll im Endeffekt die Funktion von Türwarnleuchten übernehmen und auch zur Steigerung des Einsteige-, Einpark- oder Beladekomforts dienen. Dazu ragt die Beleuchtungseinheit zumindest teilweise durch eine Aussparung des Fahrzeugbauteils hindurch. Bei dem Fahrzeugbauteil handelt es sich typischerweise um eine Heckklappe eines Personenkraftfahrzeuges. Auch in diesem Fall sind erneut Modifikationen der Heckklappe in Gestalt der Aussparung erforderlich, um die bekannte Beleuchtungseinheit mit der gewünschten Funktion auszurüsten.

Derartige Modifikationen an der Kraftfahrzeug-Klappe senken einerseits die Bereitschaft von Kraftfahrzeugherstellern zum Einbau solcher Leuchteinheiten und führen andererseits zu erhöhten Kosten. Hier setzt die Erfindung ein.

Der Erfindung liegt das technische Problem zugrunde, ein derartiges Kraftfahrzeug so weiterzuentwickeln, dass Modifikationen möglichst vermieden werden und dennoch eine einwandfreie Warnfunktion realisiert wird, und zwar bei insgesamt geringem Aufwand.

Zur Lösung dieser technischen Problemstellung ist ein gattungsgemäßes Kraftfahrzeug im Rahmen der Erfindung dadurch gekennzeichnet, dass das Ausstellelement eine Leuchteinheit aufweist.

Die Erfindung geht an dieser Stelle zunächst einmal von der Erkenntnis aus, dass die gegenüber der Kraftfahrzeugkarosserie bewegbare Kraftfahrzeug-Klappe und insbesondere Kraftfahrzeug-Tür vorteilhaft grifflos ausgelegt werden kann, d. h. ohne Außentürgriff an einem Türaußenblech ihre gewünschte Funktion ausfüllen kann. Hierfür sorgt die Ausstelleinheit, mit deren Hilfe die grifflose Kraftfahrzeug-Klappe und insbesondere Kraftfahrzeug-Tür unter Spaltbildung zur Kraftfahrzeugkarosserie zumindest soweit geöffnet werden kann, dass ein Benutzer durch den Spalt hindurch die Kraftfahrzeug-Klappe bzw. Kraftfahrzeug-Tür vollständig aufzuschwenken in der Lage ist.

Die Erfindung nutzt nun das ohnehin in diesem Zusammenhang vorgesehene und obligatorische Ausstellelement dahingehend, dass dieses mit der Leuchteinheit ausgerüstet wird. Die Leuchteinheit kann dabei nicht nur die gewünschte und zuvor bereits angesprochene Warnfunktion übernehmen, sondern auch dergestalt wirken und eingesetzt werden, dass hierdurch der Einsteige-, Einpark- oder Beladekomfort gesteigert werden.

Dazu wird das Ausstellelement in der Regel in einer Ausnehmung in versenktem Zustand aufgenommen. Die Ausnehmung findet sich dabei typischerweise in der gegenüber der Kraftfahrzeugkarosserie bewegbaren Kraftfahrzeug-Klappe respektive Kraftfahrzeug-Tür. Dadurch ist sichergestellt, dass das erfindungsgemäß mit der Leuchteinheit ausgerüstete Ausstellelement beim Öffnungsvorgang zusammen mit der Kraftfahrzeug-Klappe bzw. Kraftfahrzeug-Tür bewegt wird. Als Folge hiervon nimmt die Leuchteinheit zusammen mit dem Ausstellelement einerseits eine exponierte Position in geöffnetem Zustand ein und wird andererseits durch die Bewegung der Leuchteinheit zusammen mit der Kraftfahrzeug-Klappe respektive Kraftfahrzeug-Tür eine etwaige Warnfunktion verstärkt. Außerdem lässt sich hierdurch, d. h. durch die Bewegung der Leuchteinheit beim Öffnungsvorgang, auch der Einsteige- bzw. Einparkkomfort erhöhen, wie nachfolgend noch näher und im Detail beschrieben wird.

In der Regel ist das Ausstellelement linear verfahrbar ausgebildet. Das heißt, zum Wechsel von der versenkten in die ausgefahrene Position wird das Ausstellelement gegenüber der Ausnehmung linear verfahren. Die hiermit verbundene Verfahrrichtung des Ausstellelementes ist dabei typischerweise senkrecht zur Flächenausdehnung der Kraftfahrzeug-Klappe respektive Kraftfahrzeug-Tür orientiert. Außerdem findet sich das Ausstellelement in der Regel an einem Seitenrand des Klappenflügels bzw. Türflügels, meistens an einem der B-Säule der Kraftfahrzeugkarosserie benachbarten Seitenrand.

Hierbei geht die Erfindung von der Erkenntnis aus, dass typischerweise zumindest die vordere Kraftfahrzeug-Seitentür bzw. Fahrertür mit einer solchen Ausstelleinheit ausgerüstet ist, um insgesamt das Kraftfahrzeug öffnen zu können. Selbstverständlich lassen sich natürlich auch sämtliche Kraftfahrzeug-Klappen bzw. Kraftfahrzeug-Türen mit einer solchen Ausstelleinheit ausrüsten. Außerdem kann das Ausstellelement generell auch bis zu einer Zwischenposition zwischen der versenkten und der ausgefahrenen Position mit Hilfe des Antriebes verfahren und beaufschlagt werden.

Die Leuchteinheit erstreckt sich in der Regel entlang der linearen Verfahrrichtung des Ausstellelementes. Auf diese Weise wird die Leuchteinheit beim Verfahrvorgang des Ausstellelementes gegenüber der Ausnehmung zunehmend sichtbar. Dadurch kann der Fahrzeugbenutzer ergänzend die einwandfreie Funktionsfähigkeit des Ausstellelementes überprüfen. Denn diese ist nur dann gegeben, wenn die Leuchteinheit in der ausgefahrenen Position des Ausstellelementes komplett gegenüber der Ausnehmung freigegeben wird.

Um die zuvor bereits angesprochenen unterschiedlichen Funktionen der Leuchteinheit im Sinne einer Warnfunktion, einer Einsteige-, Einpark- oder Belade-Funktion zu realisieren und umzusetzen, sind verschiedene Maßnahmen vorgesehen. Tatsächlich weist die Leuchteinheit wenigstens eine in einen rückwärtigen Bereich des Kraftfahrzeuges abstrahlende LED auf. Mit Hilfe dieser meistens rot abstrahlende LED kann folglich eine Warnfunktion abgebildet werden, die durch ihr Abstrahlverhalten in den rückwärtigen Bereich des Kraftfahrzeuges sicherstellt, dass sich von hier aus nähernde Kraftfahrzeuge, Fußgänger, Radfahrer etc. auf die gegenüber der Kraftfahrzeugkarosserie geöffnete Kraftfahrzeug-Klappe einstellen können.

Darüber hinaus besteht die Möglichkeit, dass die Leuchteinheit alternativ oder zusätzlich zumindest eine auf einen Schwenkbereich der Kraftfahrzeug-Klappe gerichtete LED aufweist. Mit Hilfe dieser meistens als Weißlicht-LED ausgebildeten Leuchteinheit lässt sich insgesamt der Einsteige- und Einparkkomfort erhöhen. Denn durch das Aufschwenken der Kraftfahrzeug-Klappe bzw. Kraftfahrzeug-Tür wird der Schwenkbereich beleuchtet, sodass an dieser Stelle vorhandene Hindernisse, eine Wasserpfütze etc. von einem zutrittswilligen Benutzer problemlos erfasst werden können.

Ferner ist die Leuchteinheit vorteilhaft mit wenigstens einer ins Innere der Kraftfahrzeugkarosserie gerichteten LED ausgerüstet. In diesem Fall lässt sich durch eine solche typischerweise ebenfalls im Weißen abstrahlende LED der Beladekomfort erhöhen, weil mit ihrer Hilfe das Innere der Kraftfahrzeugkarosserie zumindest teilweise ausgeleuchtet wird. Dabei arbeitet die Erfindung in der Regel mit allen drei LED's gemeinsam.

Das Ausstellelement inklusive Antrieb kann vorteilhaft einen Bestandteil einer Kraftfahrzeug-Schließeinrichtung und vorzugsweise eines Kraftfahrzeug-Schlosses darstellen, wie es bereits ganz generell in der DE 10 2015 03 918 A1 beschrieben wird. Das hat den Vorteil, dass die Montage insgesamt vereinfacht ist, weil die Ausstelleinheit und das obligatorische Kraftfahrzeug-Schloss nicht separat voneinander an bzw. in dem Klappenflügel bzw. Türflügel montiert werden müssen, sondern im Rahmen dieser Variante ein einziger Montageschritt ausreicht. Außerdem ist das Kraftfahrzeug-Schloss ohnehin an einem Seitenrand des Klappenflügels bzw. Türflügels angeordnet, findet sich folglich an einer Position, die für die Anbringung der Ausstelleinheit besonders geeignet ist.

Hier besteht die weitere Möglichkeit, dass das Ausstellelement nicht gegen die B-Säule fährt, sondern vielmehr einen an die B-Säule angeschlossenen Schlosshalter. Generell kann das Ausstellelement auch mit einer Türdichtung zusammenwirken.

Die Integration des Ausstellelementes inklusive Antrieb in die Kraftfahrzeug-Schließeinrichtung und vorzugsweise das Kraftfahrzeug-Schloss hat den weiteren Vorteil, dass neben der Montage auch die Herstellungskosten reduziert sind. Denn das Ausstellelement bzw. die Ausstelleinheit und das Kraftfahrzeug-Schloss können auf ein gemeinsames Gehäuse zurückgreifen. Außerdem ist in der Regel eine zusätzliche Energie-Speichereinheit zur Energieversorgung der Leuchteinheit vorgesehen. Diese Energie-Speichereinheit kann ebenfalls in die Kraftfahrzeug-Schließeinrichtung und vorteilhaft das Kraftfahrzeug-Schloss integriert werden. Dadurch lässt sich die Energie-Speichereinheit sowohl für einen etwaigen Notbetrieb des Kraftfahrzeug-Schlosses als auch der Ausstelleinheit nutzen. Hierin sind die wesentlichen Vorteile zu sehen.

Im Ergebnis wird ein Kraftfahrzeug beschrieben, welches mit einer Ausstelleinheit für die Kraftfahrzeug-Klappe ausgerüstet ist. Durch die Ausrüstung des Ausstellelementes mit der Leuchteinheit übernimmt die Ausstelleinheit neben ihrer originären Ausstellfunktion eine Zusatzfunktion, kann nämlich als Warnhinweis genutzt werden. Auch lässt sich hierdurch das Einsteigen, Einparken oder auch Beladen des Kraftfahrzeuges vereinfachen. Hierin sind die wesentlichen Vorteile zu sehen.

Im Folgenden wird die Erfindung anhand einer lediglich ein Ausführungsbeispiel darstellenden Zeichnung näher erläutert; es zeigen:
Fig. 1 das erfindungsgemäße Kraftfahrzeug in einer perspektivischen Darstellung mit der Ausstelleinheit,
Fig. 2 den Gegenstand nach Fig. 1 in schematischem Längsschnitt und

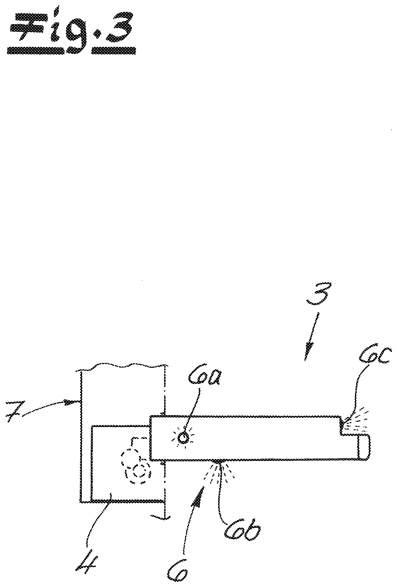

Fig. 3 die Ausstelleinheit in einer Detailansicht.

In den Figuren ist ein Kraftfahrzeug dargestellt. Bei dem Kraftfahrzeug handelt es sich nicht einschränkend um einen Personenkraftwagen. Grundsätzlich kann an dieser Stelle auch ein Lastkraftwagen realisiert werden. So oder so verfügt das Kraftfahrzeug über eine Kraftfahrzeugkarosserie 1 und eine gegenüber der Kraftfahrzeugkarosserie 1 bewegbare Kraftfahrzeug-Klappe 2. Bei der Kraftfahrzeug-Klappe 2 handelt es sich konkret um eine Kraftfahrzeug-Tür und insbesondere eine vordere Kraftfahrzeug-Seitentür 2. Die Kraftfahrzeug-Klappe respektive Kraftfahrzeug-Seitentür 2 kann gegenüber der Kraftfahrzeugkarosserie 1 um eine Achse A aufgeschwenkt werden. Das geschieht in der Regel manuell, nachdem die Kraftfahrzeug-Seitentür 2 gegenüber der Kraftfahrzeugkarosserie 1 ausgestellt worden ist.

Um die Kraftfahrzeug-Seitentür 2 ausstellen zu können, ist eine Ausstelleinheit 3, 4 realisiert. Die Ausstelleinheit 3, 4 setzt sich im Wesentlichen aus einem Ausstellelement 3 und einem zugehörigen Antrieb 4 zusammen. Man erkennt, dass das Ausstellelement 3 mit Hilfe des Antriebes 4 linear verfahren werden kann, was selbstverständlich nicht einschränkend gilt.

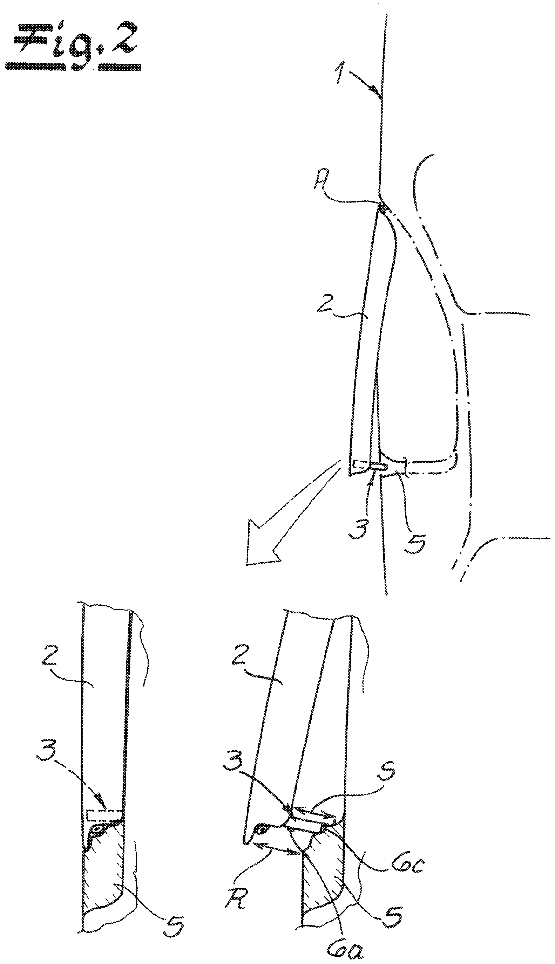

Im Zuge des Ausstellvorganges vollführt das Ausstellelement 3 eine insbesondere in der Fig. 2 nachvollziehbare Verfahrbewegung, und zwar entlang einer Verfahrrichtung R, die überwiegend senkrecht zur Flächenausdehnung der Kraftfahrzeug-Klappe respektive Kraftfahrzeug-Seitentür 2 im konkreten Beispielfall orientiert ist. Dabei geht das fragliche Ausstellelement 3 von einer in der Fig. 2 gestrichelt dargestellten versenkten in eine durchgezogen wiedergegebene ausgefahrene Position über (und umgekehrt).

Durch den Verfahrvorgang des Ausstellelementes 3 fährt dieses gegen die Kraftfahrzeugkarosserie 1 bzw. eine dortige B-Säule 5 im Beispielfall. Denn die Ausstelleinheit 3, 4 ist nach dem Ausführungsbeispiel und ausweislich der Fig. 2 an einem Seitenrand der Kraftfahrzeug-Klappe bzw. Kraftfahrzeug-Seitentür 2 angeordnet. Bei dem fraglichen Seitenrand der Kraftfahrzeug-Klappe 2 handelt es sich um denjenigen, welcher benachbart zur B-Säule 5 im Beispielfall orientiert ist.

Sobald das Ausstellelement 3 seine in der Fig. 2 durchgezogen wiedergegebene ausgefahrene Position eingenommen hat, stellt sich zwischen der Kraftfahrzeugkarosserie 1 und der Kraftfahrzeug-Klappe respektive Kraftfahrzeug-Seitentür 2 ein Spalt ein, durch welchen hindurch ein Benutzer die Kraftfahrzeug-Klappe respektive Kraftfahrzeug-Seitentür 2 ergreifen und manuell vollständig um ihre Achse A gegenüber der Kraftfahrzeugkarosserie 1 aufschwenken kann. So wird insbesondere bei grifflosen Kraftfahrzeug-Klappen 2 vorgegangen, also solchen, die aus aerodynamischen Gründen auf einen Außentürgriff verzichten.

Das Ausstellelement 3 kann dabei so lange in seiner in der Fig. 2 durchgezogen dargestellten ausgefahrenen Position verbleiben, wie die hiermit ausgerüstete Kraftfahrzeug-Klappe respektive Kraftfahrzeug-Seitentür 2 im Vergleich zur Kraftfahrzeugkarosserie 1 geöffnet ist. Sobald die Kraftfahrzeug-Klappe respektive Kraftfahrzeug-Seitentür 2 geschlossen wird, wird der Antrieb 4 derart angesteuert, dass das Ausstellelement 3 in seine versenkte Position überführt wird. Selbstverständlich kann diese versenkte Position auch unabhängig hiervon eingenommen werden, sobald ein anderes Signal für die Beaufschlagung des Antriebes 4 sorgt und das Ausstellelement 3 in die versenkte Position überführt. Dieses Signal mag von einem Schalter, einem Griff etc. an der Kraftfahrzeug-Klappe 2 oder auch im Innern der Kraftfahrzeugkarosserie 1 herrühren.

Erfindungsgemäß ist nun das Ausstellelement 3 mit einer Leuchteinheit 6 ausgerüstet. Diese Leuchteinheit 6 ist dabei üblicherweise entlang der linearen Verfahrrichtung R des Ausstellelementes 3 angeordnet bzw. erstreckt sich entlang der fraglichen Verfahrrichtung R. Außerdem findet sich die Leuchteinheit 6 in der Regel nicht an einer frontseitigen oder oberseitigen Oberfläche des im Ausführungsbeispiel quaderförmigen Ausstellelementes 3. Das heißt, die Leuchteinheit 6 strahlt in der Regel in einen rückwärtigen Bereich der Kraftfahrzeug-Klappe respektive Kraftfahrzeug-Seitentür 2. Meistens ist auch eine Abstrahlung nach unten sowie in Richtung auf das Innere der Kraftfahrzeugkarosserie 1 realisiert.

Zu diesem Zweck verfügt die Leuchteinheit 6 nach dem Ausführungsbeispiel über insgesamt drei LED's 6a, 6b und 6c. Die LED 6a strahlt dabei in den rückwärtigen Bereich des Kraftfahrzeuges ab und ist typischerweise rotleuchtend ausgelegt, um eine Warnfunktion übernehmen zu können. Denn das in den rückwärtigen Bereich abstrahlende Rotlicht der LED 6a wird vorteilhaft von sich von hinten dem Kraftfahrzeug annähernden anderen Kraftfahrzeugen, Fußgängern, Fahrradfahren etc. aufgenommen und registriert. Hierzu trägt auch der Umstand bei, dass das Ausstellelement 3 zusammen mit der Leuchteinheit 6 und der Kraftfahrzeug-Klappe 2 beim Aufschwenken um die Achse A durch die Bewegung besonders beachtet wird.

Die Leuchteinheit 6 ist darüber hinaus mit einer weiteren LED 6b ausgerüstet. Diese LED 6b ist auf einen in der Fig. 2 angedeuteten Schwenkbereich S der Kraftfahrzeug-Klappe respektive Kraftfahrzeug-Seitentür 2 gerichtet. Auf diese Weise wird ein zutrittswilliger Benutzer insbesondere über die Bodenbeschaffenheit im Schwenkbereich S sowie gegebenenfalls dort befindliche Hindernisse informiert. Zu diesem Zweck handelt es sich bei der LED 6b in der Regel um eine Weißlicht-LED.

Nach dem Ausführungsbeispiel ist die Leuchteinheit 6 dann noch mit einer weiteren dritten LED 6c ausgerüstet. Diese dritte LED 6c findet sich nach dem Ausführungsbeispiel an einer Stirnseite des quaderförmigen Ausstellelementes 3. Demgegenüber ist die LED 6a an der Rückseite und die LED 6b an der Unterseite des quaderförmigen Ausstellelementes 3 angeordnet.

Durch die Anbringung der LED 6c an der Stirnseite des Ausstellelementes 3 und die weitere Tatsache, dass diese LED 6c in der Regel weißes Licht abgibt, sorgt die Leuchteinheit 6 dafür, dass die fragliche LED 6c ins Innere der Kraftfahrzeugkarosserie 1 gerichtet ist. Dadurch wird der Innenraum für etwaige Ladevorgänge oder auch den Einstieg besonders vorteilhaft ausgeleuchtet.

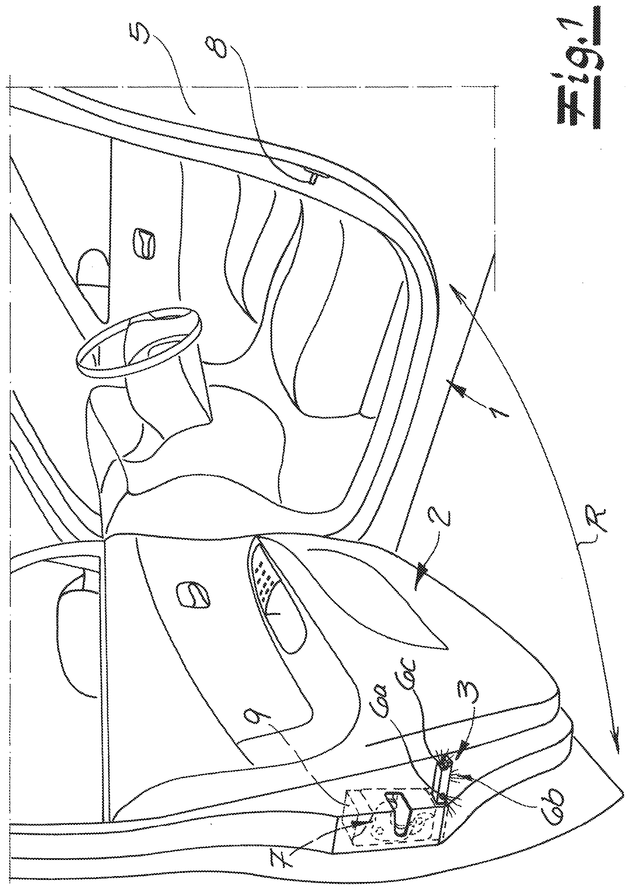

Anhand der Fig. 1 wird deutlich, dass neben der Ausstelleinheit 3, 4 zusätzlich noch eine Kraftfahrzeug-Schließeinrichtung 7 realisiert ist. Bei der Kraftfahrzeug-Schließeinrichtung 7 handelt es sich im Beispielfall um ein Kraftfahrzeug-Schloss 7. Das Kraftfahrzeug-Schloss 7 ist im Ausführungsbeispiel als sogenanntes Elektroschloss ausgelegt, verfügt also über einen elektromotorischen Antrieb, mit dessen Hilfe ein nicht ausdrücklich dargestelltes Gesperre aus Sperrklinke und Drehfalle geöffnet werden kann. Das Kraftfahrzeug-Schloss 7 an der Kraftfahrzeug-Klappe respektive Kraftfahrzeug-Seitentür 2 wechselwirkt dabei mit einem an der B-Säule 5 der Kraftfahrzeugkarosserie 1 angebrachten Schlosshalter 8.

Im Rahmen des Ausführungsbeispiels stellt nun das Ausstellelement 3 inklusive Antrieb 4, also die gesamte Ausstelleinheit 3, 4 einen Bestandteil der Kraftfahrzeug-Schließeinrichtung und nach dem Ausführungsbeispiel des Kraftfahrzeug-Schlosses 7 dar. Das heißt, die Ausstelleinheit 3, 4 ist in das Kraftfahrzeug-Schloss 7 integriert. Das gilt selbstverständlich nur in dem konkreten Beispielfall und ist nicht als einschränkend zu verstehen. Außerdem ist noch eine Energie-Speichereinheit 9 realisiert, mit deren Hilfe die Leuchteinheit 6 mit der erforderlichen elektrischen Energie versorgt werden kann.

Man erkennt anhand der Darstellung insbesondere in der Fig. 1, dass die Energie-Speichereinheit 9 in die Kraftfahrzeug-Schließeinrichtung respektive das Kraftfahrzeug-Schloss 7 integriert ist. Auf diese Weise kann die Energie-Speichereinheit 9 nicht nur die Leuchteinheit 6 mit der erforderlichen elektrischen Energie versorgen, sondern steht prinzipiell auch für eine Notöffnung des Kraftfahrzeug-Schlosses 7 zur Verfügung, und zwar in dem Fall, dass eine im Innern der Kraftfahrzeugkarosserie 1 angeordnete Hauptenergiequelle ausgefallen sein sollte. Außerdem kann durch diese Auslegung die Ausstelleinheit 3, 4 im Notbetrieb ebenfalls mit der erforderlichen elektrischen Energie seitens der Energie-Speichereinheit 9 versorgt werden.

### Bezugszeichenliste

- **1**: **Kraftfahrzeugkarosserie**
- **2**: **Kraftfahrzeug-Seitentür**
- **3**: **Ausstellelement**
- **4**: **Antrieb**
- **5**: **B-Säule**
- **6**: **Leuchteinheit**
- **6a, 6b, 6c**: **LED**
- **7**: **Kraftfahrzeug-Schließeinrichtung**
- **8**: **Schlossschalter**
- **9**: **Energie-Speichereinheit**

## Patentansprüche

1. Kraftfahrzeug, mit wenigstens einer gegenüber einer Kraftfahrzeugkarosserie (1) bewegbaren Kraftfahrzeug-Klappe respektive Kraftfahrzeug-Seitentür (2), die gegenüber der Kraftfahrzeugkarosserie (1) um eine Achse (A) aufgeschwenkt werden kann, und mit einer Ausstelleinheit (3, 4),
welche ein Ausstellelement (3) mit zugehörigem Antrieb (4) aufweist, wobei das Ausstellelement (3) gegenüber der Kraftfahrzeugkarosserie (1) und/oder der Kraftfahrzeug-Klappe (2) in zumindest eine versenkte und eine ausgefahrene Position mit Hilfe des Antriebes (4) überführbar ist, wobei sobald das Ausstellelement (3) seine ausgefahrene Position eingenommen hat, sich zwischen der Kraftfahrzeugkarosserie (1) und der Kraftfahrzeug-Klappe respektive Kraftfahrzeug-Seitentür (2) ein Spalt einstellt, durch welchen hindurch ein Benutzer die Kraftfahrzeug-Klappe respektive Kraftfahrzeug-Seitentür (2) ergreifen und manuell vollständig um ihre Achse (A) gegenüber der Kraftfahrzeugkarosserie (1) aufschwenken kann,
**dadurch gekennzeichnet, dass**
das Ausstellelement (3) eine Leuchteinheit (6) aufweist.

2. Kraftfahrzeug nach Anspruch 1, **dadurch gekennzeichnet, dass** das Ausstellelement (3) in einer Ausnehmung in versenktem Zustand aufgenommen wird.

3. Kraftfahrzeug nach Anspruch 1 oder 2, **dadurch gekennzeichnet, dass** das Ausstellelement (3) linear verfahrbar ausgebildet ist.

4. Kraftfahrzeug nach einem der Ansprüche 1 bis 3, **dadurch gekennzeichnet, dass** sich die Leuchteinheit (6) entlang der linearen Verfahrrichtung (R) des Ausstellelementes (3) erstreckt.

5. Fahrzeug nach einem der Ansprüche 1 bis 4, **dadurch gekennzeichnet, dass** die Leuchteinheit (6) wenigstens eine in einen rückwärtigen Bereich abstrahlende LED (6a) aufweist.

6. Kraftfahrzeug nach einem der Ansprüche 1 bis 5, **dadurch gekennzeichnet, dass** die Leuchteinheit (6) zumindest eine auf einen Schwenkbereich (S) der Kraftfahrzeug-Klappe (2) gerichtete LED (6b) aufweist.

7. Kraftfahrzeug nach einem der Ansprüche 1 bis 6, **dadurch gekennzeichnet, dass** die Leuchteinheit (6) mit wenigstens einer ins Innere der Kraftfahrzeugkarosserie (1) gerichteten LED (6c) ausgerüstet ist.

8. Kraftfahrzeug nach einem der Ansprüche 1 bis 7, **dadurch gekennzeichnet, dass** das Ausstellelement (3) inklusive Antrieb (4) einen Bestandteil einer Kraftfahrzeug-Schließeinrichtung (7), vorzugsweise eines Kraftfahrzeug-Schlosses (7), darstellt.

9. Kraftfahrzeug nach einem der Ansprüche 1 bis 8, **dadurch gekennzeichnet, dass** eine Energie-Speichereinheit (9) zur Energieversorgung der Leuchteinheit (6) vorgesehen ist.

10. Kraftfahrzeug nach Anspruch 9, **dadurch gekennzeichnet, dass** die Energie-Speichereinheit (9) in die Kraftfahrzeug-Schließeinrichtung (7) integriert ist.

## Claims

1. Motor vehicle, comprising at least one motor vehicle panel or motor vehicle side door (2) which can be moved relative to a motor vehicle body (1) and can be pivoted about an axis (A) relative to the motor vehicle body (1), and comprising an deployment unit (3, 4)
which has a deployment element (3) comprising an associated drive (4), wherein the deployment element (3) can be transferred, relative to the motor vehicle body (1) and/or the motor vehicle panel (2), into at least a retracted position and an extended position with the aid of the drive (4), wherein as soon as the deployment element (3) has assumed its extended position, a gap is established between the motor vehicle body (1) and the motor vehicle panel or motor vehicle side door (2), through which gap a user can grip the motor vehicle panel or motor vehicle side door (2) and pivot it manually completely about its axis (A) relative to the motor vehicle body (1),
**characterized in that**
the deployment element (3) has a lighting unit (6).

2. Motor vehicle according to claim 1, **characterized in that,** in the retracted state, the deployment element (3) is received in a recess.

3. Motor vehicle according to claim 1 or 2, **characterized in that** the deployment element (3) is linearly displaceable.

4. Motor vehicle according to any of claims 1 to 3, **characterized in that** the lighting unit (6) extends along the linear displacement direction (R) of the deployment element (3).

5. Vehicle according to any of claims 1 to 4, **characterized in that** the lighting unit (6) has at least one LED (6a) that emits into a rear region.

6. Motor vehicle according to any of claims 1 to 5, **characterized in that** the lighting unit (6) has at least one LED (6b) directed onto a pivot region (S) of the motor vehicle panel (2).

7. Motor vehicle according to any of claims 1 to 6, **characterized in that** the lighting unit (6) is provided with at least one LED (6c) directed into the interior of the motor vehicle body (1).

8. Motor vehicle according to any of claims 1 to 7, **characterized in that** the deployment element (3), including the drive (4), represents a component of a motor vehicle latching device (7), preferably a motor vehicle latch (7).

9. Motor vehicle according to any of claims 1 to 8, **characterized in that** an energy storage unit (9) is provided for supplying energy to the lighting unit (6).

10. Motor vehicle according to claim 9, **characterized in that** the energy storage unit (9) is integrated into the motor vehicle latching device (7).

## Revendications

1. Véhicule automobile, comportant au moins un hayon de véhicule automobile ou une porte latérale de véhicule automobile (2) mobile par rapport à une carrosserie de véhicule automobile (1) et qui peut être pivoté autour d'un axe (A) par rapport à la carrosserie de véhicule automobile (1), et comportant une unité de déploiement (3, 4),
laquelle présente un élément de déploiement (3) comportant un entraînement (4) associé, dans lequel l'élément de déploiement (3) peut être transféré, par rapport à la carrosserie de véhicule automobile (1) et/ou au hayon de véhicule automobile (2), dans au moins une position abaissée et une position relevée à l'aide de l'entraînement (4), dans lequel, dès que l'élément de déploiement (3) a pris sa position relevée, un interstice s'établit entre la carrosserie de véhicule automobile (1) et le hayon de véhicule automobile ou la porte latérale de véhicule automobile (2), à travers lequel interstice un utilisateur peut saisir le hayon de véhicule automobile ou la porte latérale de véhicule automobile (2) et le faire pivoter manuellement complètement autour de son axe (A) par rapport à la carrosserie de véhicule automobile (1),
**caractérisé en ce que**
l'élément de déploiement (3) présente une unité d'éclairage (6).

2. Véhicule automobile selon la revendication 1, **caractérisé en ce que** l'élément de déploiement (3) est logé dans un évidement à l'état abaissé.

3. Véhicule automobile selon la revendication 1 ou 2,
**caractérisé en ce que** l'élément de déploiement (3) est conçu de manière à pouvoir se déplacer de façon linéaire.

4. Véhicule automobile selon l'une des revendications 1 à 3,
**caractérisé en ce que** l'unité d'éclairage (6) s'étend le long du sens de déplacement (R) linéaire de l'élément de déploiement (3).

5. Véhicule selon l'une des revendications 1 à 4, **caractérisé en ce que** l'unité d'éclairage (6) présente au moins une DEL (6a) rayonnant dans une zone arrière.

6. Véhicule automobile selon l'une des revendications 1 à 5,
**caractérisé en ce que** l'unité d'éclairage (6) présente au moins une DEL (6b) orientée vers une zone de pivotement (S) du hayon de véhicule automobile (2).

7. Véhicule automobile selon l'une des revendications 1 à 6,
**caractérisé en ce que** l'unité d'éclairage (6) est équipée d'au moins une DEL (6c) orientée vers l'intérieur de la carrosserie de véhicule automobile (1).

8. Véhicule automobile selon l'une des revendications 1 à 7,
**caractérisé en ce que** l'élément de déploiement (3), y compris l'entraînement (4), constitue une partie intégrante d'un dispositif de fermeture de véhicule automobile (7), de préférence d'une serrure de véhicule automobile (7).

9. Véhicule automobile selon l'une des revendications 1 à 8,
**caractérisé en ce qu'**une unité de stockage d'énergie (9) permettant l'alimentation en énergie de l'unité d'éclairage (6) est prévue.

10. Véhicule automobile selon la revendication 9, **caractérisé en ce que** l'unité de stockage d'énergie (9) est intégrée dans le dispositif de fermeture de véhicule automobile (7).
